# EUROPEAN PATENT APPLICATION

(11) **EP 4 184 751 A1**
(43) Date of publication of application: **24.05.2023**
(21) Application number: 21841715.2
(22) Date of filing: 21.05.2021
(51) Int. Cl.: H02J 13/00, H01M 10/42, G06Q 50/06, H02J 7/00, H02J 7/34, B60L 50/60, B60L 55/00, B60L 58/12, H02J 3/32, H02J 3/38, B60L 53/66

(54) **MOVING CHARGING SYSTEM ACHIEVED BY TRANSPORTING SECONDARY BATTERY**

(30) Priority: 16.07.2020 JP 2020122205
(71) Applicant: 3DOM ALLIANCE INC., Tokyo 107-0052 (JP)
(72) Inventor: MATSUMURA Akihiko, Tokyo 107-0052 (JP); HARADA Masako, Tokyo 107-0052 (JP); SATSUKAWA Seiji, Tokyo 107-0052 (JP); ARIKAWA Tomoaki, Tokyo 107-0052 (JP)
(74) Representative: Schröer, Gernot H.
(86) International application number: PCT/JP2021/019317
(87) International publication number: WO 2022/014155

(57) **Abstract**

A home receives power supply from a secondary battery (fixed battery). An electricity delivery vehicle includes a built-in secondary battery (mobile battery), and moves autonomously. The home measures a battery charge level of the fixed battery and transmits the battery charge level to a server. When the battery charge level of the fixed battery at the home is lower than a power supply threshold, the server instructs an electricity delivery vehicle in a standby state to start moving. Upon receiving the start instruction, the electricity delivery vehicle sets the home as a goal point, and automatically starts moving. Upon reaching the home, the electricity delivery vehicle connects the built-in mobile battery with the fixed battery at the home, and supplies power from the mobile battery to the fixed battery.

## Description

### Field

The present invention relates to electrical energy supply, and in particular, to a technology for supplying electrical energy by transportation of secondary batteries.

### Background

There is a growing interest in a "sustainable society" against a backdrop of population growth accompanied by rapid increase in energy consumption. A sustainable society can be defined as a society capable of preserving the global environment, passing the preserved global environment to the next generation, and also satisfying the needs of the current generation.

In order to achieve a sustainable society, there have been needs for active use of natural energy such as photovoltaic power generation, wind power generation, and geothermal power generation. A future town has been currently planned in which a best mix of a variety of power sources including natural energy based on regional characteristics is pursued and energy is supplied as much as possible by local production for local consumption.

### Related Art List

### Patent Literatures

Patent Literature 1: JP 5360157 B

### Summary

### Technical Problem

In addition, many of advanced countries face the problem of crumbling infrastructure including power grids. For remodeling a town, reconstruction of power grids is also necessary. Overhead power lines spoils the landscape of a town. If power lines are laid underground (to remove utility poles), however, the construction costs become higher. In a country like Japan that is prone to natural disasters such as earthquakes and typhoons, the risk that a power grid is torn has to be considered.

The present invention has been achieved on the basis of recognition of the aforementioned problems, and a chief object thereof is to provide a novel method for supplying energy.

### Solution to problem

A mobile charging system according to an aspect of the present invention includes: a home to which power is to be supplied from a first secondary battery; a mobile object including a second secondary battery and being autonomously movable; and a server connected with the home and the mobile object via a communication network.

The home includes: a battery managing unit to measure a battery charge level of the first secondary battery; and a communication unit to transmit battery information including the battery charge level to the server.

The server includes: a receiving unit to receive the battery information from the home; and a transmitting unit to transmit a start instruction to the mobile object in a standby state when the battery charge level in the battery information is lower than a first threshold.

The mobile object includes: a drive mechanism to move the mobile object; a receiving unit to receive the start instruction; a movement control unit to set the home as a goal point and instruct the drive mechanism to move upon receiving the start instruction, and a battery managing unit to supply power to the first secondary battery from the second secondary battery when the mobile object has reached the home.

A mobile object according to an aspect of the present invention includes: a second secondary battery; a drive mechanism to move the mobile object by the second secondary battery as a power source; a receiving unit to receive a start instruction specifying a home from a server; a path calculating unit to refer to map information and calculate a path from a current position to the home upon receiving the start instruction; a movement control unit to control the drive mechanism in accordance with the calculated path; and a battery managing unit to supply power to a first secondary battery installed at the home from the second secondary battery upon reaching the home, wherein

The movement control unit controls the drive mechanism to return to a predetermined return position from the home after power supply to the first secondary battery.

A server according to an aspect of the present invention is connected, via a communication network, with a home to which power is to be supplied from a first secondary battery and a mobile object including a second secondary battery and being autonomously movable.

The server includes: a receiving unit to receive battery information including a battery charge level of the first secondary battery from the home; and a transmitting unit to transmit a start instruction specifying the home as a goal point to the mobile object in a standby state when the battery charge level indicated in the battery information is lower than a first threshold.

A mobile charging system according to another aspect of the present invention includes: a plurality of homes to each of which power is supplied from a first secondary battery; a plurality of mobile objects each including a second secondary battery and each being autonomously movable; and a server connected with the homes and the mobile objects via a communication network.

The homes each include: a battery managing unit to measure a battery charge level of the first secondary battery; and a communication unit to transmit first battery information including the battery charge level together with a home ID to the server.

The server includes: a first receiving unit to receive the first battery information from each of the homes; a second receiving unit to receive second battery information including a battery charge level of a second secondary battery from each of the mobile objects; a first determining unit to determine whether or not one or more homes with a battery charge level indicated in the first battery information being lower than a first threshold are present; a second determining unit to determine whether or not one or more mobile objects with a battery charge level indicated in the second battery information being equal to or higher than a fourth threshold are present; and a transmitting unit to transmit a start instruction when a home with the battery charge level in the first secondary battery being lower than the first threshold is present, the start instruction specifying the home, the transmitting unit transmitting the start instruction to any one of mobile objects in a standby state and with the battery charge level of the second secondary battery being equal to or higher than the fourth threshold.

The mobile objects each include: a drive mechanism to move the mobile object; a receiving unit to receive the start instruction; a path calculating unit to refer to map information and calculate a path from a current position to the home specified by the start instruction upon receiving the start instruction; a movement control unit to control the drive mechanism in accordance with the calculated path; and a battery managing unit to supply power to the first secondary battery installed at the specified home from the second secondary battery of the mobile object upon reaching the specified home.

The movement control unit of each of the mobile objects controls the drive mechanism to return from the home to a predetermined return position after power supply to the first secondary battery.

### Advantageous Effects of Invention

The present invention enables supply of energy by a delivery system.

### Brief Description of Drawings

FIG. 1 is a conceptual diagram of a mobile charging system.
FIG. 2 is a schematic diagram for explaining a method for supplying power by using electricity delivery vehicles.
FIG. 3 is a functional block diagram of an electricity delivery vehicle.
FIG. 4 is a functional block diagram of a home.
FIG. 5 is a functional block diagram of a server.
FIG. 6 is a data structure table of home power consumption information.
FIG. 7 is a data structure table of home estimation information.
FIG. 8 is a data structure table of vehicle information.
FIG. 9 is a flowchart illustrating processes performed by the server to determine whether or not an electricity delivery vehicle is to start moving.
FIG. 10 is a flowchart illustrating processes performed by an electricity delivery vehicle in receipt of a start instruction.
FIG. 11 is a flowchart illustrating processes performed by an electricity delivery vehicle after finishing power supply.
FIG. 12 is a data structure table of home adjustment information.
FIG. 13 is a data structure table of town adjustment information.
FIG. 14 is a data structure table of weather adjustment information.

### Description of Embodiments

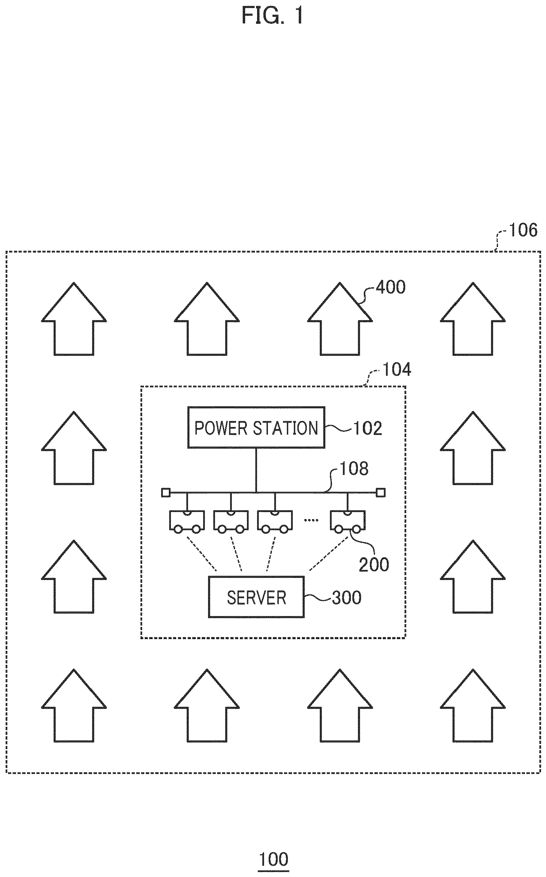

FIG. 1 is a conceptual diagram of a mobile charging system 100.

In the present embodiment, assume that the mobile charging system 100 is operated in a town of several hundred to several thousand people. In this town, local production for local consumption of energy, or in particular, electrical energy is set as a goal.

The mobile charging system 100 includes a power supply system 104 and a power consumption system 106. The power supply system 104 corresponds to a producer of electrical energy. The power consumption system 106 includes a plurality of homes 400. The homes 400 correspond to consumers of electrical energy. A secondary battery (first secondary battery) of a relatively large size (hereinafter also referred to as a "fixed battery") is installed in each home 400. In each home 400, the fixed battery covers necessary electrical energy at home.

The power supply system 104 includes a power station 102, a server 300, and a plurality of electricity delivery vehicles 200. The power station 102 is a collection of one or more power production sources. The power station 102 includes power production sources using natural energy such as photovoltaic power generation, geothermal power generation, biomass power generation, and wind power generation. The power production sources included in the power station 102 need not be concentrated in one place, and may be distributed over the whole town. In addition, the power station 102 may include existing power stations such as a thermal power station, a hydraulic power station, and a nuclear power station in addition to power generation using natural energy.

The electricity delivery vehicles 200 are unmanned autonomous vehicles; The electricity delivery vehicles 200 each include a built-in secondary battery (second secondary battery) of a relatively small size (hereinafter also referred to as a "mobile battery"). The electricity delivery vehicles 200 each have a height of about 0.5 to 1.2 meters and travel at low speeds of about 3 to 10 kilometers per hour, for example. In addition, the electricity delivery vehicles 200 each have an imaging function using a camera, a position detecting function using a global positioning system (GPS), and a communication function. The electricity delivery vehicles 200 are connected with the power station 102 via power supply lines 108 to charge the built-in mobile batteries. Power may be supplied to the power supply lines 108 not only from the power station 102 in the town but also a power station outside the town as a reserve power supply. Hereinafter, a place at which the electricity delivery vehicles 200 receive power supply through the power supply lines 108 is referred to as a "standby area".

The server 300 periodically receives first battery information including the remaining battery level (battery charge level or state of charge) of the fixed battery from each home 400 via a wired or wireless communication network. The first battery information indicates a home ID for identifying the home 400, the capacity of the fixed battery, the remaining battery level of the fixed battery, and the usage of electrical energy at the home 400 such as power consumption (the amount of decrease per unit period of the remaining battery level) at the home 400. The server 300 instructs an electricity delivery vehicle 200 in the standby area to start moving for a home 400 in which the remaining battery level is low.

The electricity delivery vehicle 200 in receipt of the start instruction autonomously moves toward the specified home 400. When the electricity delivery vehicle 200 reaches the home 400, the built-in mobile battery is connected to the fixed battery of the home 400, and power is supplied from the mobile battery to the fixed battery. After power supply, the electricity delivery vehicle 200 automatically returns to the standby area. Alternatively, the power supply from the mobile battery to the fixed battery may be known wireless power transfer such as a magnetic field resonance method.

Hereinafter, "a power consumption of X[%] of a fixed battery at a home 400 in a certain time slot W (for example, 10:00-11:00 on Friday)" means that the remaining battery level of the fixed battery has lowered by X[%] in this time slot. Note that, however, when the fixed battery is charged by the mobile battery in the time slot W, the power consumption of the home in the time slot W is treated as "not available (N/A)". The home 400 notifies the server 300 of the time during which the fixed battery is charged as part of the first battery information.

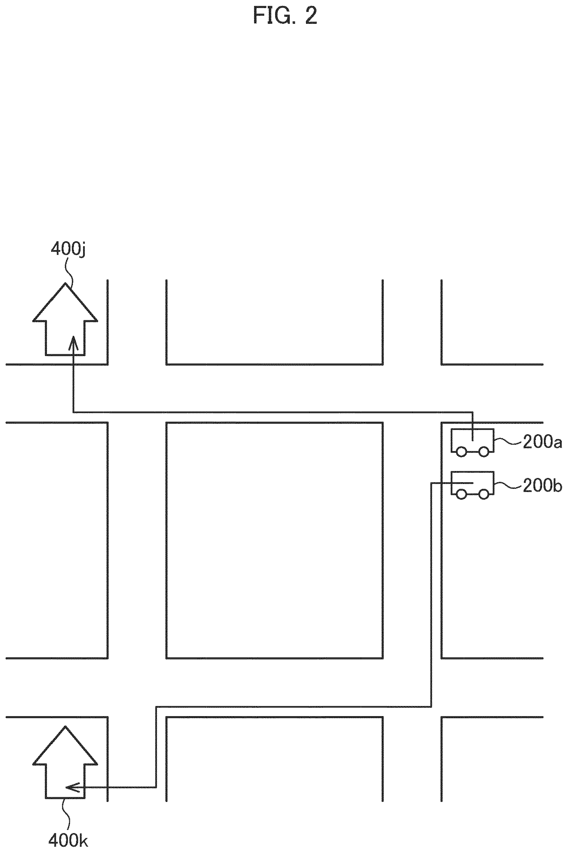

FIG. 2 is a schematic diagram for explaining a method for supplying power by using electricity delivery vehicles 200.

The server 300 selects electricity delivery vehicles 200 with the remaining battery level of the mobile batteries being equal to or larger than a threshold (hereinafter referred to as a "moving threshold") as candidates for a vehicle to be sent (dispatched) from the electricity delivery vehicles 200 in the standby area. Hereinafter, the electricity delivery vehicles 200 that are candidates for a vehicle to be sent will be referred to as "S vehicles (standby vehicles)". Herein, assume that the moving threshold (fourth threshold) is 90[%].

The server 300 selects homes 400 with the battery charge levels (states of charge: SOCs) of the fixed batteries being smaller than a threshold (hereinafter referred to as a "power supply threshold") as candidates for power supply from the homes 400. Hereinafter, the homes 400 that are candidates for power supply will be referred to as "R homes (requesting homes)". Assume that the basic setting of the power supply threshold (first threshold) is 30[%]. The power supply threshold may be variable, details of which will be described later.

The server 300 transmits the home IDs of R homes (homes 400 with the remaining battery levels of the fixed batteries being smaller than the first threshold (power supply threshold)) to S vehicles (electricity delivery vehicles 200 with the remaining battery levels of the mobile batteries being equal to or larger than the fourth threshold (moving threshold)). The S vehicles have stored therein map information of the town and address information of the homes 400. The server 300 periodically transmits (multicasts) latest map information and address information to all the electricity delivery vehicles 200 to update data in the electricity delivery vehicles 200. Each electricity delivery vehicle 200 (S vehicle) calculates a travel path to an R home on the basis of the home ID, the map information, and the address information, and starts moving toward the R home. FIG. 2 illustrates travel paths of an electricity delivery vehicle 200a (S vehicle) setting a home 400j (R home) as a goal point and an electricity delivery vehicle 200b (S vehicle) setting a home 400k (R home) as a goal point.

Because the electricity delivery vehicles 200 are small and travel at low speeds, the electricity delivery vehicles 200 are capable of traveling on pedestrian lanes. Each electricity delivery vehicle 200 includes a camera mounted thereon, and decelerates or stops when an obstacle such as a person is present within a predetermined range from itself. Upon reaching an intersection, an electricity delivery vehicle 200 images a pedestrian traffic signal, checks the signal, and crosses a pedestrian crossing on a green light.

Alternatively, special lanes for electricity delivery vehicles 200 may be provided. Still alternatively, guiding lines such as white lines may be marked on the ground, and the electricity delivery vehicles 200 may move along the guiding lines.

A plurality of beacons may be placed in the ground, and the electricity delivery vehicles 200 may travel in accordance with guiding signals from the beacons. Each electricity delivery vehicle 200 may receive a guiding signal including a beacon ID from a beacon, and compare the beacon ID with map information in which the positions associated with individual beacon IDs are registered in advance to recognize its current position.

The electricity delivery vehicles 200 in the present embodiment are assumed to move distances of up to 1.6 kilometers each way, that is, within 3.2 kilometers per round trip by autonomous driving.

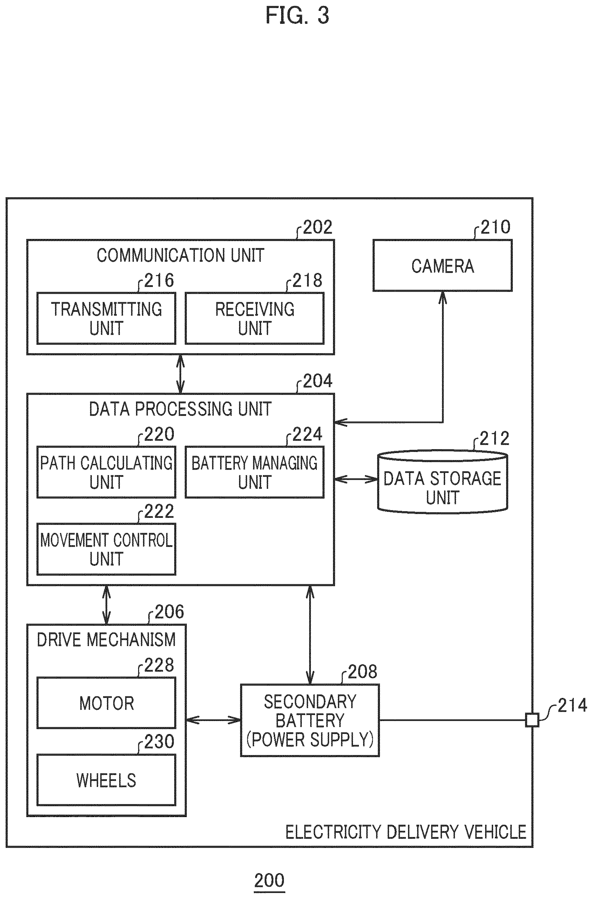

FIG. 3 is a functional block diagram of an electricity delivery vehicle 200.

Respective components of the electricity delivery vehicle 200 are implemented by hardware including arithmetic units such as central processing units (CPUs) and various co-processors, storage devices such as memories and storages, and wire or wireless communication lines connecting the components, and software, stored in the storage devices, for supplying processing instructions to the arithmetic units. Computer programs may be constituted by device drivers, an Operating System, various application programs on upper layers thereof, and libraries providing common functions to the programs. The electricity delivery vehicle 200 further includes a hardware mechanism for electromotive drive, such as a drive mechanism 206 and a secondary battery 208 (mobile battery).

The blocks described below are not in units of hardware but are in units of functions.

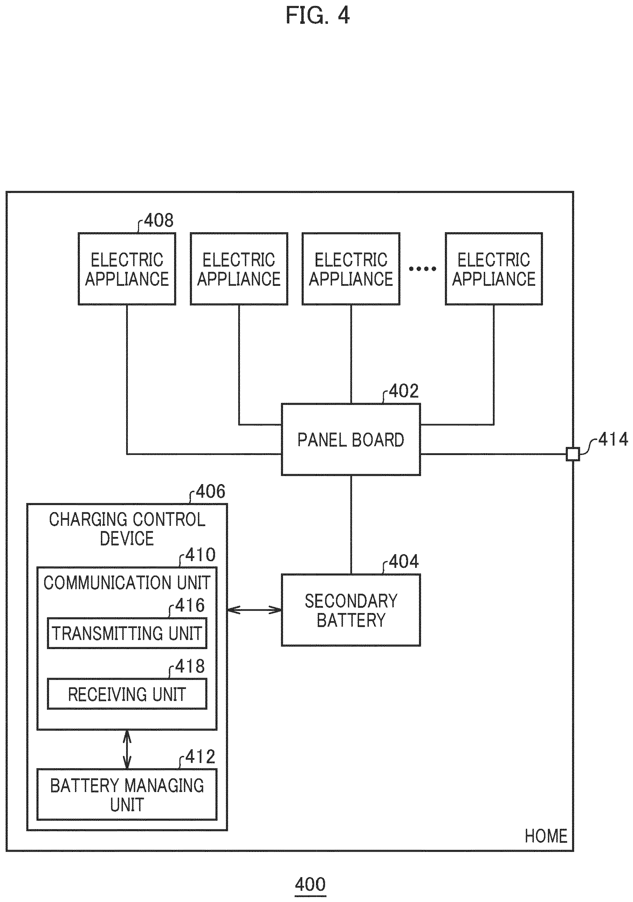

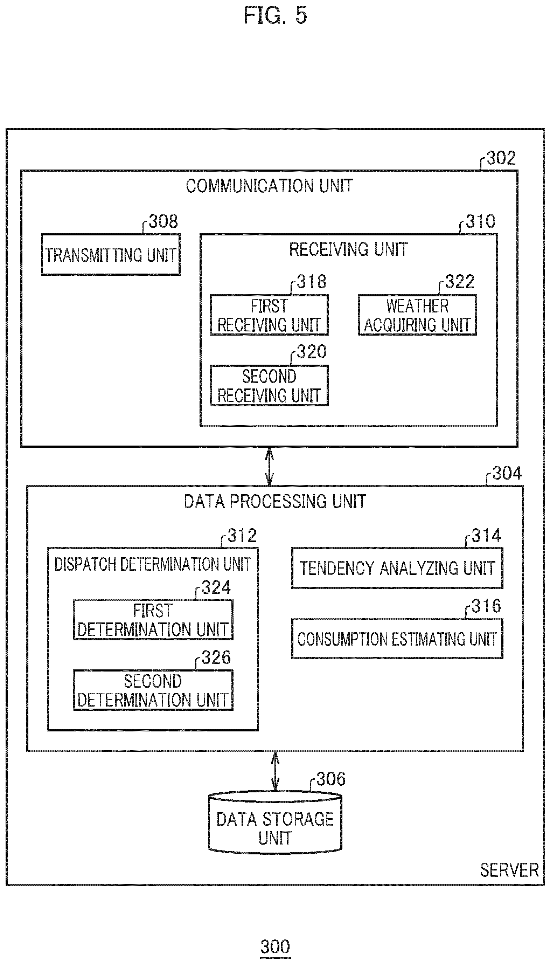

The same is applicable to functional block diagrams of a home 400 (FIG. 4) and the server 300 (FIG. 5).

The electricity delivery vehicle 200 includes a communication unit 202, a data processing unit 204, the drive mechanism 206, the secondary battery 208 (mobile battery), a camera 210, and a data storage unit 212.

The communication unit 202 performs processing for communication with the server 300 and the like via a wired or wireless communication network. The data storage unit 212 stores various data. The camera 210 serves as an "eye" of the electricity delivery vehicle 200 by imaging the outside. In addition, the electricity delivery vehicle 200 may include other sensors such as a distance measuring sensor. The data processing unit 204 performs various processes on the basis of data acquired by the communication unit 202, the camera 210, and the like and data stored in the data storage unit 212. The drive mechanism 206 is a mechanism for driving of the electricity delivery vehicle 200. The secondary battery 208 (mobile battery) is connectable with a fixed battery and a power supply line 108 via a charge and discharge connection port 214. The secondary battery 208 (mobile battery) is charged by supply of electrical energy from a power supply line 108 via the charge and discharge connection port 214. In addition, the secondary battery 208 (mobile battery) supplies electrical energy to a fixed battery via the charge and discharge connection port 214. The secondary battery 208 (mobile battery) also functions as a power supply of the drive mechanism 206 and others. The data processing unit 204 also functions as an interface of the communication unit 202, the camera 210, the data storage unit 212, the drive mechanism 206, and the secondary battery 208 (mobile battery).

The communication unit 202 includes a transmitting unit 216 for transmitting data to external devices such as the server 300, and a receiving unit 218 for receiving data from external devices. The transmitting unit 216 periodically transmits second battery information to the server 300. The second battery information includes a vehicle ID for identifying the electricity delivery vehicle 200, and information indicating the usage of electrical energy in the electricity delivery vehicle 200 such as the remaining battery level (battery charge level) of the secondary battery 208 (mobile battery). The transmitting unit 216 transmits vehicle state information of the electricity delivery vehicle 200, as necessary. The vehicle state information includes the current position, the moving speed, the operation state, and the like of the electricity delivery vehicle 200.

The drive mechanism 206 includes a motor 228 and wheels 230. The motor 228 rotates the wheels 230 with the electrical energy supplied from the secondary battery 208 (mobile battery). The motor 228 controls the rotating speed and direction of the wheels 230 in accordance with instructions from a movement control unit 222.

The data processing unit 204 includes a path calculating unit 220, the movement control unit 222, and a battery managing unit 224.

The path calculating unit 220 refers to the map information stored in the data storage unit 212, and calculates a travel path from the current position to a goal point. The movement control unit 222 controls traveling of the electricity delivery vehicle 200 by transmitting control signals to the drive mechanism 206 in accordance with the travel path. When the camera 210 has detected an obstacle within a predetermined distance, the movement control unit 222 adjusts the moving speed and the moving direction of the electricity delivery vehicle 200 to avoid collision. The battery managing unit 224 periodically measures the remaining battery level of the secondary battery 208 (mobile battery). When the secondary battery 208 (mobile battery) is connected with the fixed battery of a home 400, the battery managing unit 224 controls charging of the fixed battery with the secondary battery 208 (mobile battery).

FIG. 4 is a functional block diagram of a home 400.

The home 400 includes a secondary battery 404 (fixed battery), a charging control device 406, a panel board 402, a charge and discharge connection port 414, and a plurality of electric appliances 408. The electric appliances 408 are various power consuming entities such as a refrigerator, a washing machine, and a dishwasher. The electric appliances 408 are connected with the secondary battery 404 (fixed battery) via the panel board 402. The panel board 402 is connected to the charge and discharge connection port 414. The secondary battery 404 (fixed battery) is connectable with the secondary battery 208 (mobile battery) of an electricity delivery vehicle 200 via the panel board 402 and the charge and discharge connection port 414. The secondary battery 404 (fixed battery) is charged by supply of electrical energy from the secondary battery 208 (mobile battery) of an electricity delivery vehicle 200 via the charge and discharge connection port 414 and the panel board 402. In addition, the secondary battery 404 (fixed battery) supplies electrical energy to the respective electric appliances 408 via the panel board 402.

The charging control device 406 includes a communication unit 410 and a battery managing unit 412.

The communication unit 410 performs processing for communication with the server 300 and the like via a wired or wireless communication network. The communication unit 410 includes a transmitting unit 416 for transmitting data to external devices such as the server 300, and a receiving unit 418 for receiving data from external devices. The transmitting unit 416 periodically transmits the first battery information (described above) to the server 300. The battery managing unit 412 controls charge and discharge of the secondary battery 404 (fixed battery), and periodically measures the remaining battery level of the secondary battery 404 (fixed battery).

FIG. 5 is a functional block diagram of the server 300.

The server 300 includes a communication unit 302, a data processing unit 304, and a data storage unit 306.

The communication unit 302 performs processing for communication with the electricity delivery vehicles 200 and the like via a wired or wireless communication network. The data storage unit 306 stores various data. The data processing unit 304 performs various processes on the basis of data acquired by the communication unit 302 and data stored in the data storage unit 306. The data processing unit 304 also functions as an interface of the communication unit 302 and the data storage unit 306.

The communication unit 302 includes a transmitting unit 308 for transmitting data to external devices such as the electricity delivery vehicles 200, and a receiving unit 310 for receiving data from external devices. The transmitting unit 308 transmits a start instruction, which will be described later, to an electricity delivery vehicle 200 in accordance with an instruction from a dispatch determination unit 312.

The receiving unit 310 includes a first receiving unit 318, a second receiving unit 320, and a weather acquiring unit 322.

The first receiving unit 318 receives the first battery information from the homes 400. The second receiving unit 320 receives the second battery information from the electricity delivery vehicles 200. The weather acquiring unit 322 obtains weather information from an external website of weather information via the Internet. Assume that weather information in the present embodiment is a probability of frozen precipitation (chance of snow) provided by the meteorological bureau.

The data processing unit 304 includes the dispatch determination unit 312, a tendency analyzing unit 314, and a consumption estimating unit 316.

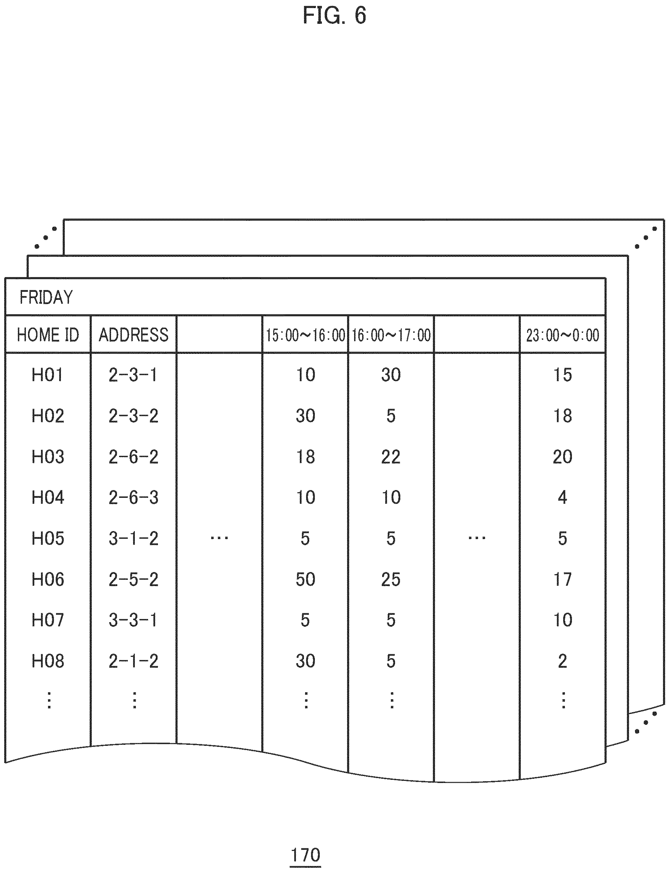

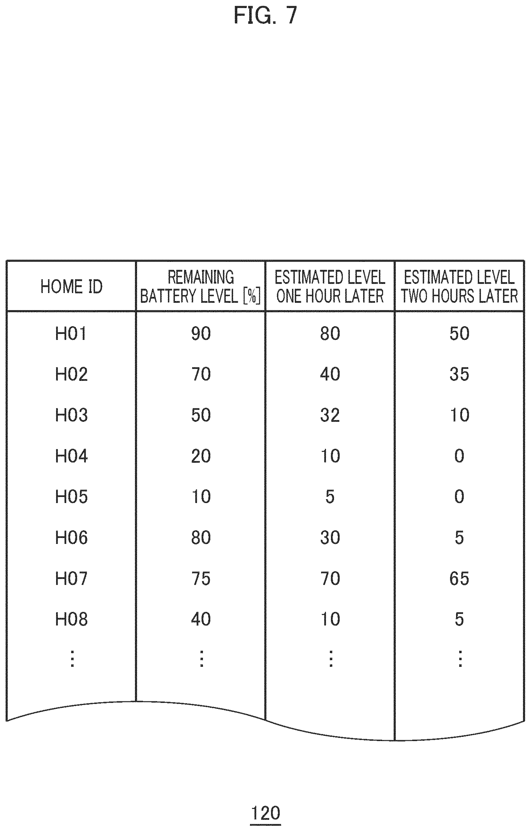

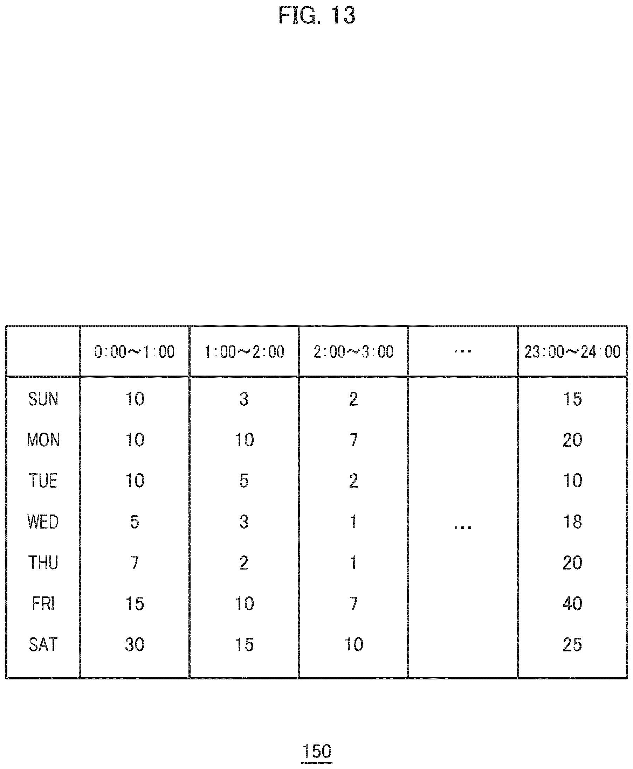

The dispatch determination unit 312 determines whether or not an electricity delivery vehicle 200 is to be sent. The dispatch determination unit 312 includes a first determination unit 324 and a second determination unit 326. The first determination unit 324 determines whether or not an R home that needs charging with an electricity delivery vehicle 200 is present. The second determination unit 326 determines whether or not an S vehicle that can be sent to an R home is present. Details of methods for identifying an R home and an S vehicle will be described later. The tendency analyzing unit 314 analyzes the power consumption tendency of each home 400. The power consumption tendency of a home 400 is information (individual consumption information) indicating power consumption (decrease in remaining battery level) of each home 400 in each time slot. Details of power consumption tendencies of homes 400 will be described later with reference to FIGS. 6 and 7. The tendency analyzing unit 314 analyzes the power consumption tendencies of the homes 400 or, in other words, the power consumption tendency of the whole town. The power consumption tendency of the whole town is also information (general consumption information) indicating power consumption (decrease in remaining battery level) of the whole town in each time slot. Details thereof will be described later with reference to FIG. 13. The consumption estimating unit 316 estimates a future remaining power amount on the basis of past data relating to the power consumption tendency, that is, power consumption.

FIG. 6 is a data structure table of home power consumption information 170.

The home power consumption information 170 is stored in the data storage unit 306 of the server 300. As described above, each home 400 is identified by a home ID. The transmitting unit 416 of each home 400 periodically (every hour, for example) transmits the first battery information to the server 300. The tendency analyzing unit 314 of the server 300 refers to the first battery information and records the current remaining battery level of the secondary battery 404 (fixed battery) of each home 400. In addition, the tendency analyzing unit 314 aggregates the power consumption (decrease in remaining battery level) of each home 400 for each predetermined time (in each time slot, for example).

The home power consumption information 170 of FIG. 6 indicates the power consumption tendency of each home on Friday. For example, assume that, according to the first battery information collected from a home 400 with a home ID = H01 (hereinafter expressed as a "home 400 (H01)"), the power consumption of "15:00-16:00 on Friday, June 12th" was 15[%], the power consumption of "15:00-16:00 on Friday, June 19th" was 10[%], and the power consumption of "15:00-16:00 on Friday, June 26th" was 5[%]. The tendency analyzing unit 314 obtains an average power consumption on the basis of data on several recent Fridays. In a case where data of the aforementioned three days are used, the tendency analyzing unit 314 calculates the power consumption (individual power consumption tendency) of the home 400 (H01) in "16:00-17:00 on Friday" to be 10[%].

When the power consumption in the same time slot on Friday, June 19th was "N/A", the power consumption on Friday, June 5th, which is a week before Friday, June 12, is further included and the average is obtained from the data on recent three Fridays (5th, 12th, and 26th). Each time the tendency analyzing unit 314 calculates the latest power consumption of the home 400 (H01) in "15:00-16:00 on Friday", the tendency analyzing unit 314 updates the corresponding field of the home power consumption information 170. The same is applicable to the other days of the week, the other time slots, and the other homes. According to such a control method, an average power consumption of each home 400 in each time slot on each day of the week is registered in the home power consumption information 170. The home power consumption information 170 shows when and how much power each home 400 tends to consume. The consumption estimating unit 316 estimates a future remaining battery level of each home 400 on the basis of the home power consumption information 170 (which will be described later).

According to the home power consumption information 170, the average power consumption of the secondary battery 404 (fixed battery) of the home 400 (H01) in "15:00-16:00 on Friday" is 10[%]. In contrast, the average power consumption of the home 400 (H02) in the same time slot is 30[%]. This shows that a person or persons in the home 400 (H02) have a lifestyle consuming more power in "15:00-16:00 on Friday" than those in the home 400 (H01).

Hereinafter, a preset time slot like "15:00-16:00 on Friday" registered in the home power consumption information 170 will be referred to as a "preset period". While the length of a preset period in the present embodiment is one hour, a preset period may be set to any length.

FIG. 7 is a data structure table of home estimation information 120.

The home estimation information 120 is stored in the data storage unit 306 of the server 300. The consumption estimating unit 316 estimates a future remaining battery level on the basis of the home power consumption information 170. The home estimation information 120 shows estimated values of near-future remaining battery level of each home 400.

Assume that the current time is "14:50 of Friday" and that the current remaining battery level of the home 400 (H01) is 90[%]. According to the home estimation information 120 in FIG. 7, the remaining battery level at 15:50, which is one hour later, is estimated to decrease to 80[%] unless the secondary battery 404 (fixed battery) is not newly charged. According to the home power consumption information 170 in FIG. 6, the power consumption of the home 400 (H01) in "15:00-16:00 on Friday" is estimated to be about 10[%]. In this case, for estimation of the remaining battery level after one hour, the consumption estimating unit 316 adopts 10[%] in the preset period "15:00-16:00 on Friday" that overlaps the most with a time slot of "14:50 (current time) to 15:50 (one hour later) on Friday". The consumption estimating unit 316 estimates the remaining battery level after one hour to be 80[%] by subtracting 10[%], which is the estimated power consumption, from 90[%], which is the current remaining battery level.

Similarly, for estimation of the remaining battery level of the home 400 (H01) after two hours, 30[%] is adopted for the time slot of "15:50 (one hour later) to 16:50 (two hours later) on Friday" on the basis of the data in a preset period of "16:00-17:00 on Friday" in the home power consumption information 170 in FIG. 6. In this case, the remaining battery level of the secondary battery 404 (fixed battery) at 16:50, which is two hours later, is estimated to be 50[%] (=80-30).

The tendency analyzing unit 314 aggregates the power consumption of each home 400. The tendency analyzing unit 314 calculates the average power consumption of each home 400 in each preset period. Data on the aggregated power consumption indicate the power consumption tendency.

The first determination unit 324 determines a home 400 with the current remaining battery level being lower than the power supply threshold (30[%]) to be an "R home". According to FIG. 7, the home 400 (H04) is an R home because the remaining battery level is lower than the power supply threshold. In this case, the first determination unit 324 makes an electricity delivery vehicle 200 (S vehicle) start moving toward the home 400 (H04). Similarly, the first determination unit 324 makes an electricity delivery vehicle 200 (S vehicle) start moving toward a home 400 (H05).

The remaining battery level of a home 400 (H08) is 40[%], which is higher than the power supply threshold, and therefore the home 400 (H08) is not an R home. In view of the past power consumption tendency, however, the remaining battery level is estimated to significantly decrease from 40[%] to 10[%] one hour later. The home 400 (H08) may therefore be an R home one hour later.

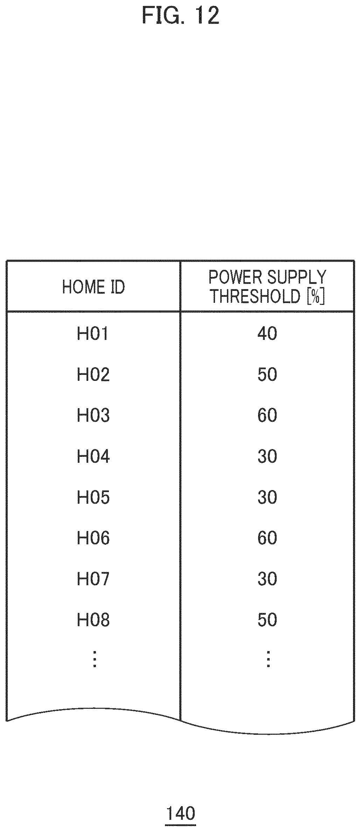

The remaining battery level of a home 400 (H03) is 50[%], which is higher than the power supply threshold, and is estimated to be 32[%], which is higher than the power supply threshold, one hour later. In view of the past power consumption tendency, the remaining battery level of the home 400 (H03) is estimated to decrease from 32[%] to 10[%] two hours later. The home 400 (H03) may therefore be an R home two hours later. The power supply threshold may be a fixed value, or may be variable on the basis of the power consumption tendency. Hereinafter, the description will first be on the assumption that the power supply threshold is a fixed value to clarify a basic idea of the present invention. An embodiment in which the power supply threshold is varied will be described with reference to FIG. 12 and subsequent drawings.

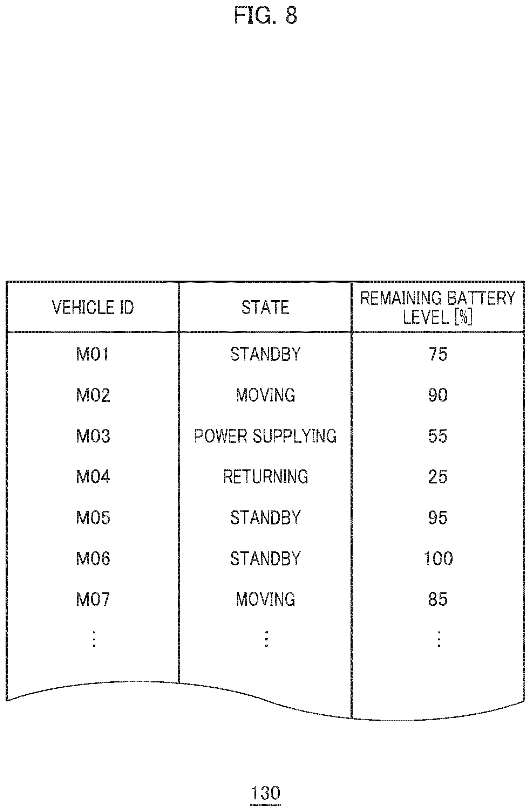

FIG. 8 is a data structure table of vehicle information 130.

The vehicle information 130 is stored in the data storage unit 306 of the server 300. As described above, each electricity delivery vehicle 200 is identified by a vehicle ID. The transmitting unit 216 of each electricity delivery vehicle 200 periodically transmit the second battery information to the server 300.

The second determination unit 326 updates the vehicle information 130 each time the second battery information is received. In addition, each electricity delivery vehicle 200 transmits the vehicle state information indicating the state of the electricity delivery vehicle 200 as necessary during movement from the standby area to a home 400, at start of power supply upon arrival at a home 400, or the like. According to the vehicle information 130 in FIG. 8, an electricity delivery vehicle 200 (M01) is in a standby state in the standby area, and the remaining battery level of the secondary battery 208 (mobile battery) thereof is 75[%].

There are four states of the electricity delivery vehicles 200, which are "standby", "moving", "power supplying", and "returning". The "standby" state means that an electricity delivery vehicle 200 waits in the standby area, is connected with a power supply line 108 for charging of the secondary battery 208 (mobile battery) thereof. The "moving" state means that an electricity delivery vehicle 200 having left the standby area is moving toward a home 400. The "power supplying" state means that an electricity delivery vehicle 200 having arrived at a home 400 is charging the secondary battery 404 (fixed battery) of the home 400. The "returning" state means that an electricity delivery vehicle 200 having finished power supply is moving toward the standby area (return position).

As described above, the second determination unit 326 determines an electricity delivery vehicle 200 with the remaining battery level of the secondary battery 208 (mobile battery) being equal to or higher than the moving threshold (90[%]) and being in the "standby" state to be an "S vehicle". According to the vehicle information 130 in FIG. 8, an electricity delivery vehicle 200 (M05) and an electricity delivery vehicle 200 (M06) are S vehicles. When an R home is present, the dispatch determination unit 312 instructs the electricity delivery vehicle 200 (M05) or the electricity delivery vehicle 200 (M06) to start moving.

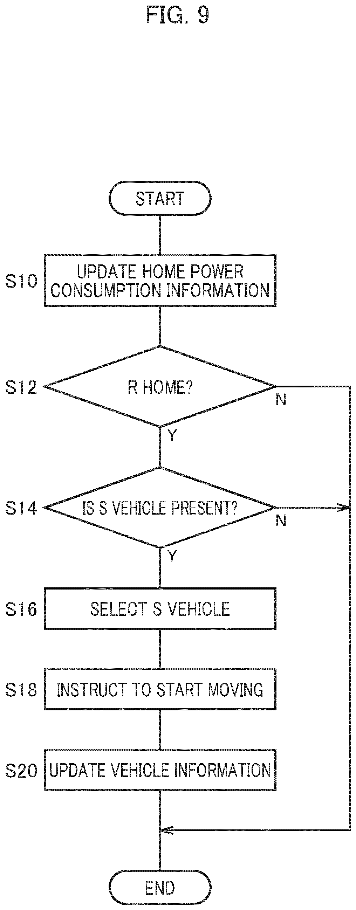

FIG. 9 is a flowchart illustrating processes performed by the server 300 to determine whether or not an electricity delivery vehicle 200 is to start moving.

The processes illustrated in FIG. 9 are performed each time the server 300 receives the first battery information from any of the homes 400. First, each time the first battery information is received from a home 400, the first determination unit 324 of the server 300 updates the record of the remaining battery level in the home power consumption information 170 (S10). The first battery information includes the current remaining battery level of the secondary battery 404 (fixed battery) of the home 400. The tendency analyzing unit 314 periodically receives the first battery information to recalculate the amount by which the remaining battery level decreases in each preset period, that is, the power consumption per preset period. Similarly, the tendency analyzing unit 314 also updates data on the power consumption tendency of the whole town.

The first determination unit 324 determines whether or not a home 400 with the remaining battery level being lower than the power supply threshold, that is, an R home is present (S12). If no home 400 being checked is an R home (N in S12), the process is terminated. If a home 400 is an R home (Y in S12), the second determination unit 326 determines whether or not any electricity delivery vehicle 200 with the remaining battery level being equal to or higher than the moving threshold and in the "standby" state, that is, any S vehicle is present (S14). The second battery information and the vehicle state information are also periodically transmitted from each electricity delivery vehicle 200, and the second determination unit 326 updates the vehicle information 130 as appropriate.

If no S vehicle is present (N in S14), the process is terminated. If an S vehicle is present (Y in S14), the second determination unit 326 selects the S vehicle (S16). If a plurality of S vehicles are present, the second determination unit 326 selects an S vehicle with the highest remaining battery level. The dispatch determination unit 312 transmits a start instruction including the home ID of a home 400 (R home) that needs charging to the selected S vehicle (S18). The second determination unit 326 also updates the vehicle information 130 by changing the state of the S vehicle that starts moving from "standby" to "moving" (S20).

For example, assume that the home 400 (H05) is identified as an R home that needs charging, and the electricity delivery vehicle 200 (M06) is selected to start moving. In this case, the transmitting unit 308 transmits a start instruction including a home ID = H05 to the electricity delivery vehicle 200 (M06). The electricity delivery vehicle 200 (M06) has addresses of the homes 400 registered therein. The electricity delivery vehicle 200 (M06) starts moving toward the home 400 (H05) on the basis of the map information. The second receiving unit 320 also receives the vehicle state information from the electricity delivery vehicle 200 (M06) when the electricity delivery vehicle 200 (M06) has reached the home 400 (H05) or when the electricity delivery vehicle 200 (M06) has finished power supply at the home 400 (H05). Each time the second battery information or the vehicle state information is received, the second determination unit 326 updates the vehicle information 130.

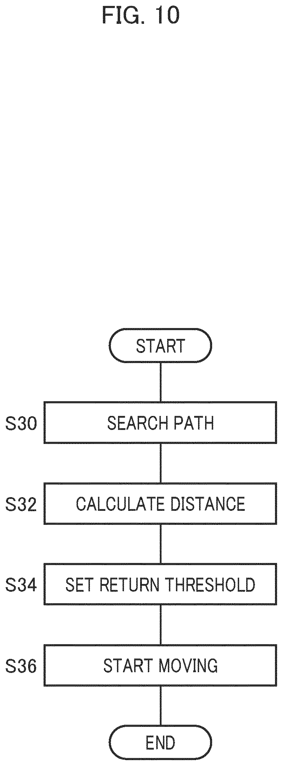

FIG. 10 is a flowchart illustrating processes performed by each electricity delivery vehicle 200 in receipt of a start instruction.

The processes in FIG. 10 are performed when an electricity delivery vehicle 200 in a standby state has received a start instruction from the server 300. The start instruction includes the home ID of an R home set as a goal point. The path calculating unit 220 of the electricity delivery vehicle 200 refers to the address information, and sets the specified R home as the destination. Subsequently, the path calculating unit 220 refers to the map information, and calculates the travel path to the R home (S30). A method for calculating the travel path is a method similar to a technology used in a typical car navigation system.

Subsequently, the electricity delivery vehicle 200 calculates the distance from the current position (standby area) to the destination (R home) on the basis of the map information (S32). The battery managing unit 224 sets a "return threshold (second threshold)" depending on the calculated distance (S34). As the distance is longer, the return threshold is set to a higher value. When the remaining battery level of the secondary battery 208 (mobile battery) has become lower than the return threshold during charging at a home 400, the electricity delivery vehicle 200 starts returning to the standby area even if the secondary battery 404 (fixed battery) is not sufficiently charged, details of which will be described later. As the destination is farther, that is, as the moving distance is longer, more of electrical energy stored in the secondary battery 208 (mobile battery) is consumed as energy for the movement of the electricity delivery vehicle 200. When the moving distance is long, the return threshold is set to be high, so that the electricity delivery vehicle 200 can keep sufficient electrical energy necessary for returning from the home 400 to the standby area.

After setting the return threshold, the electricity delivery vehicle 200 starts automatic movement toward the home 400 (R home) (S36). When the electricity delivery vehicle 200 has reached the home 400, the charge and discharge connection port 214 of the electricity delivery vehicle 200 is connected with the charge and discharge connection port 414 of the home 400. The connection mechanism of the charge and discharge connection ports 214 and 414 may be similar to those of known technologies such as plug-in connection. After the connection, the battery managing unit 224 of the electricity delivery vehicle 200 applies electric current from the secondary battery 208 (mobile battery) to the secondary battery 404 (fixed battery) to charge the secondary battery 404 (fixed battery). When the secondary battery 404 (fixed battery) is fully charged, the battery managing unit 412 of the home 400 notifies the electricity delivery vehicle 200 of completion of charging. In addition, as described above, the battery managing unit 224 of the electricity delivery vehicle 200 measures the remaining battery level of the secondary battery 208 (mobile battery). The battery managing unit 224 terminates power supply to the secondary battery 404 (fixed battery) when the secondary battery 404 (fixed battery) is fully charged or when the remaining battery level of the secondary battery 208 (mobile battery) has become lower than the return threshold.

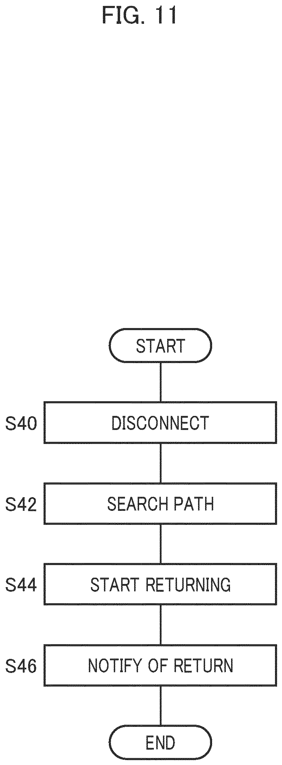

FIG. 11 is a flowchart illustrating processes performed by each electricity delivery vehicle 200 after finishing power supply.

The processes in FIG. 11 are performed after completion of power supply. The battery managing unit 224 of the electricity delivery vehicle 200 disconnects the connection between the charge and discharge connection port 414 of the home 400 and the charge and discharge connection port 214 of the electricity delivery vehicle 200 (S40). Subsequently, the path calculating unit 220 searches for a travel path from the current position to the standby area (return position) (S42). The movement control unit 222 causes the electricity delivery vehicle 200 to move automatically along the calculated travel path (S44). At this point, the transmitting unit 216 of the electricity delivery vehicle 200 notifies the server 300 of start of returning as the vehicle state information (S46). Upon being notified of the start of returning, the server 300 changes the state of this electricity delivery vehicle 200 from "power supplying" to "returning".

Thereafter, the electricity delivery vehicle 200 returns to the standby area. After the electricity delivery vehicle 200 has reached the standby area, the battery managing unit 224 connects the charge and discharge connection port 214 with a power supply line 108. The second determination unit 326 of the server 300 changes the state of the electricity delivery vehicle 200 from "returning" to "standby". The secondary battery 208 (mobile battery) of the electricity delivery vehicle 200 is charged through the power supply line 108.

[Power supply threshold adjusting method 1 (home adjustment)]

The power supply threshold may be a fixed value or a variable value. The first determination unit 324 may adjust power supply threshold depending on homes 400 and depending on time slots on the basis of the power consumption tendencies of the individual homes 400. Hereinafter, such a method of adjusting a power supply threshold will be referred to as "home adjustment".

FIG. 12 is a data structure table of home adjustment information 140.

The home adjustment information 140 is stored in the data storage unit 306 of the server 300. In home adjustment, the first determination unit 324 adjusts the power supply threshold depending on the power consumption tendencies of the homes 400. In other words, the first determination unit 324 adjusts the power supply threshold on the basis of the home power consumption information 170 indicating the power consumption tendencies of the homes 400. Firstly, assume that the basic value of the power supply threshold is 30[%]. When an average decrease amount of the remaining battery level after one hour or, in other words, an estimated power consumption, which is calculated on the basis of past data, is equal to or higher than 20[%], the first determination unit 324 adds 20[%] as a first correction value to the basic value. Similarly, when an estimated power consumption after two hours is equal to or higher than 20[%], the first determination unit 324 further adds 10[%] as a second correction value. The home adjustment information 140 indicates a power supply threshold obtained by home adjustment for each home 400.

For example, assume that the current time is 15:50. With reference to the home estimation information 120 in FIG. 7, the power consumption of the home 400 (H01) after one hour is 10[%], and the power consumption thereof after two hours is 30[%]. The first determination unit 324 therefore adjusts the power supply threshold for the home 400 (H01) to 40[%] (=30+0+10). When the current remaining battery level of the home 400 (H01) is 90[%], which is higher than the adjusted power supply threshold (40%), the first determination unit 324 determines the home 400 (H01) as not being an R home.

The current remaining battery level of the home 400 (H03) is 50[%], the power consumption thereof after one hour is 18[%], and the power consumption thereof after two hours is 22[%]. The first determination unit 324 adjusts the power supply threshold for the home 400 (H03) to 60[%] (=30+20+10). Because the current remaining battery level 50[%] of the home 400 (H03) is lower than the power supply threshold (60[%]) resulting from home adjustment, the first determination unit 324 determines the home 400 (H03) as being an R home. Although the current remaining battery level of the home 400 (H03) is sufficient, power consumption is estimated to be high after one hour and after two hours, and the first determination unit 324 therefore makes the power supply threshold higher to cause an electricity delivery vehicle 200 to move toward the home 400 (H03) early.

Such a control method enables prevention of future power shortage at the homes 400 by sending electricity delivery vehicles 200 to homes 400 that are likely to increase power consumption in the near future even when the current remaining battery level is sufficient.

The tendency analyzing unit 314 calculates a power consumption in a preset period on the basis of a difference between the remaining battery level at the start point of the preset period and the remaining battery level at the end point thereof. When the secondary battery 404 (fixed battery) has received power supply from the secondary battery 208 (mobile battery) during the preset period, however, the data in this period is excluded from aggregation (N/A).

[Power supply threshold adjusting method 2 (town adjustment)]

The first determination unit 324 may adjust the power supply thresholds for all the homes 400 together depending on the power consumption tendencies of all of a plurality of homes 400 or, in other words, the whole town. Hereinafter, such a method of adjusting power supply thresholds will be referred to as "town adjustment".

FIG. 13 is a data structure table of town adjustment information 150.

The town adjustment information 150 is stored in the data storage unit 306 of the server 300. In town adjustment, the tendency analyzing unit 314 aggregates the power consumption tendencies of the whole town depending on the days of the week and time slots on the basis of the first battery information obtained from the homes 400. In town adjustment, the first determination unit 324 adjusts the power supply thresholds for all the homes 400 together depending on the power consumption tendencies of the whole town.

The town adjustment information 150 is information indicating a result of aggregation of the power consumption tendencies of the whole town. For example, according to the town adjustment information 150, in a period of "1:00 to 2:00 a.m. on Sunday", the remaining battery levels of the secondary batteries 404 (fixed batteries) in the whole town or, in other words, the remaining battery levels of the homes in the same time slot lower by an average of 3[%]. Hereinafter, such an average value of power consumptions per unit time in the whole town will be referred to as "town power consumption". Each time the first battery information is acquired, the tendency analyzing unit 314 recalculates the town power consumption, and updates the town adjustment information 150. The tendency analyzing unit 314, however, excludes the homes 400 that have received power supply during measurement from the calculation.

More specifically, when the average power consumptions of the home 400 (H01), the home 400 (H02), and the home 400 (H03) in the same time slot are 5[%], 6[%], and 7[%], respectively, the average power consumption of these three homes 400 is 6[%]. In this manner, the tendency analyzing unit 314 calculates the town power consumption by averaging the power consumptions of the homes 400 in the same time slot.

In town adjustment, first assume that the basic value of the power supply threshold is 30[%]. When the town power consumption after one hour is equal to or higher than 20[%] (third threshold), the first determination unit 324 adds 10[%] as a first correction value to the basic value. Similarly, when the town power consumption after two hours is equal to or higher than 20[%], the first determination unit 324 further adds 5[%] as a second correction value.

For example, assume that the current time and day is 23:45 on Friday. According to the town adjustment information 150, the town power consumption in a time slot including "0:45 on Saturday", which is one hour later, is estimated to be 30[%]. The town power consumption in a time slot including "1:45 on Saturday", which is two hours later, is estimated to be 15[%]. In this case, the first determination unit 324 adjusts the power supply thresholds for all the homes 400 to 40[%] (=30+10). If the current remaining battery level of the home 400 (H09) is 50[%], the home 400 (H09) is not an R home. If the current remaining battery level of a home 400 (H10) is 35[%], the home 400 (H10) is an R home.

Control based on the power consumption tendency in the whole town has been described above. Alternatively, for example, the whole town may be divided into a plurality of blocks, and similar control may be performed in units of blocks. Alternatively, a plurality of homes may be grouped, and similar control may be performed on the group.

According to such a control method, the power consumption tendencies in the whole town are referred to, and electricity delivery vehicles 200 can be sent early to homes 400 at which power shortage may occur in the near future. In other words, in a time slot in which the power consumption in the whole town is high, the power supply thresholds are high, and electricity delivery vehicles 200 are therefore sent relatively frequently.

Home adjustment and town adjustment may be combined. For example, the power supply threshold for the home 400 (H10) is adjusted by a first correction value and a second correction value based on home adjustment. Subsequently, the first determination unit 324 may further adjust the power supply threshold resulting from home adjustment by a first correction value and a second correction value based on town adjustment. Alternatively, the first determination unit 324 may set, as a new power supply threshold, an average of a power supply threshold calculated by home adjustment and a power supply threshold calculated by town adjustment.

[Weather adjustment of power supply threshold]

The first determination unit 324 may adjust a power supply threshold depending on the weather. Hereinafter, such a method of adjusting a power supply threshold will be referred to as "weather adjustment".

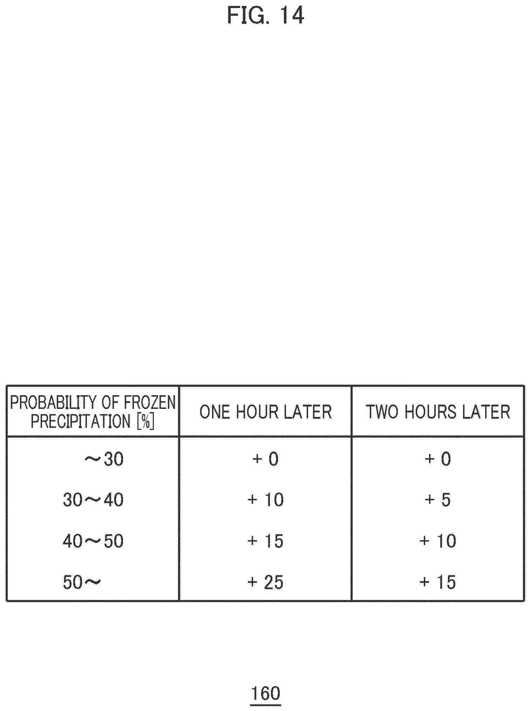

FIG. 14 is a data structure table of weather adjustment information 160.

The weather adjustment information 160 is stored in the data storage unit 306 of the server 300. In weather adjustment, the weather acquiring unit 322 obtains weather information from an external website of weather forecast. Weather information in the present embodiment is a probability of frozen precipitation announced by the meteorological bureau. In the weather adjustment method, the power supply thresholds are adjusted when a probability of frozen precipitation in the near future satisfies a predetermined condition (weather condition).

The weather adjustment information 160 defines in advance an adjustment value for a power supply threshold based on a future probability of frozen precipitation. For example, when the probability of frozen precipitation after one hour is lower than 30[%], the adjustment value is "0". When the probability of frozen precipitation after one hour is equal to or higher than 30[%] and lower than 40[%], the adjustment value is "10". Assume that the basic value of the power supply threshold is 30[%]. When the probability of frozen precipitation after one hour is 35[%] according to the weather information, the first determination unit 324 sets the power supply threshold to 40[%] (=30+10).

For example, assume that the probability of frozen precipitation after one hour is 45[%] and that the probability of frozen precipitation after two hours is 35[%]. According to the weather adjustment information 160 in FIG. 14, the adjustment values are "15" and "5", respectively. In this case, the first determination unit 324 adjusts the power supply threshold to 50% (=30+15+5).

When it may snow, the power supply thresholds increase, and electricity delivery vehicles 200 can be sent early. As a result, a risk that electricity delivery vehicles 200 cannot be sent owing to future snowfall can be easily avoided in advance.

Home adjustment and weather adjustment may be combined. Similarly, town adjustment and weather adjustment may be combined. Furthermore, home adjustment, town adjustment, and weather adjustment may be combined to adjust the power supply thresholds. Any combination may be applied.

### [Overview]

The mobile charging system 100 has been described above with reference to an embodiment.

According to the embodiment, the system of carrying electricity by secondary batteries 208 (mobile batteries) built in the electricity delivery vehicles 200 eliminates the need for power transmission lines. Because the number of electricity delivery vehicles 200 may be adjusted depending on the size and the power demand of a town, the costs necessary for building and improving social infrastructure can be flexibly adjusted. The electricity delivery vehicles 200 are basically assumed to cruise in a "town", which is a relatively narrow region. Because movement over long distances is not expected, electrical energy consumption of secondary batteries 208 (mobile batteries) due to the movement of the electricity delivery vehicles 200 can be suppressed.

Power transmission lines entail transmission loss. In particular, the transmission loss at long-distance power transmission is likely to be high. Overhead power transmission lines impair the landscape in some cases, and there are many cases where power transmission lines are to be eliminated as much as possible in terms of nature conservation. Townscaping measures are important in protection of tourism resources, and the landscape is said to significantly affect the value of real estate. The potential value of using no power transmission lines is therefore very high. When a number of electricity delivery vehicles 200 cruise around a town sluggishly, the residents will gradually be familiar with the electricity delivery vehicles 200 moving around. The electricity delivery vehicles 200 are expected to fit into everyday scenery like buses and trams. Needless to say, a system in which power transmission lines and electricity delivery vehicles 200 coexist may be used instead of a system of delivering electricity only by electricity delivery vehicles 200. For example, an introducing method increasing the number of electricity delivery vehicles 200 while gradually reducing the number of power transmission lines may be considered.

Each electricity delivery vehicle 200 uses the built-in secondary battery 208 (mobile battery) not only for the source of power supply to secondary batteries 404 (fixed batteries) but also for the power source of the electricity delivery vehicle 200 itself. By adjusting the return threshold depending on the moving distance, the electricity delivery vehicle 200 can be controlled so that the electricity delivery vehicle 200 can return to the standby area without fail after terminating power supply to a home 400.

The tendency analyzing unit 314 analyzes the power consumption tendencies of the homes 400. The first determination unit 324 sets a high power supply threshold when power consumption in the near future is estimated to increase. Such a control method (home adjustment) enables pre-emptive measures to meet future power demands by sending electricity delivery vehicles 200 to homes 400 early even when the current remaining battery levels of the homes 400 are sufficient.

Similarly, the server 300 may analyze the power consumption tendencies of a plurality of homes 400, that is, the whole town, and set a high power supply threshold when power demand in the near future is estimated to be high (town adjustment). In addition, a high power supply threshold may also be set when the weather is expected to worsen, such as a case of a predicted snowfall, so that electricity delivery vehicles 200 can be sent early to avoid situations in which electrical energy cannot be delivered when needed.

The present invention is not limited to the embodiment described above and modifications thereof, and any component thereof can be modified and embodied without departing from the scope of the invention. Components described in the embodiment and modifications can be combined as appropriate to form various other embodiments. Some components may be omitted from the components presented in the embodiment and modifications.

### [Modifications]

In the description of the present embodiment, the secondary batteries 404 (fixed batteries) of the homes 400 are charged. The power supply from the electricity delivery vehicles 200 is not limited to homes 400, but may also be to electric vehicles, electric propulsion ships, electric aircrafts, and the like.

In the description of the present embodiment, a model in which electricity is delivered by electricity delivery vehicles 200 to individual homes from a power station 102 present in a town is assumed. A plurality of power stations 102 may be dispersedly located, and electricity delivery vehicles 200 may be dispersedly arranged near the power station 102. For example, in a case where a home 400 (H01) has a solar panel installed on its roof, the home 400 (H01) may be a power supplier. An electricity delivery vehicle 200 (M01) is leased to the home 400 (H01) in advance. The secondary battery 404 (fixed battery) of the home 400 (H01) and the secondary battery 208 (mobile battery) of the electricity delivery vehicle 200 (M01) are charged by the solar panel. When both of the remaining battery levels of the secondary battery 404 (fixed battery) and the secondary battery 208 (mobile battery) have become equal to or larger than respective thresholds, the electricity delivery vehicle 200 (M01) becomes an S vehicle. The server 300 may send this electricity delivery vehicle 200 (M01) to another home 400, as necessary.

Electricity is not limited to be delivered by autonomous vehicles, and may be delivered by drones including built-in secondary batteries 208 (mobile batteries) or robots including built-in secondary batteries 208 (mobile batteries).

The server 300 may remotely control electricity delivery vehicles 200. For example, the server 300 may refer to the map information, indicates a travel path to an electricity delivery vehicle 200, and remotely control the traveling speed and the moving direction of the electricity delivery vehicle 200. Beacons may be placed in the ground, and the server 300 may transmit a vehicle ID and a direction indicating signal to each beacon. Upon detecting a direction indicating signal for itself, an electricity delivery vehicle 200 controls the moving direction in accordance with the direction indicating signal. Such a control method enables the server 300 to control each electricity delivery vehicle 200 by using beacons.

After completing charging, the electricity delivery vehicles 200 may cruise around the town instead of waiting in the standby area. Each electricity delivery vehicle 200 periodically transmits its current position with its vehicle ID as vehicle state information to the server 300. Upon detecting an R home, the server 300 may locate an electricity delivery vehicle 200 cruising near the R home, and send the electricity delivery vehicle 200 to the R home. After completion of charging at the R home, the electricity delivery vehicle 200 returns to the standby area and charges the secondary battery 208 (mobile battery) again through the power supply lines 108.

In the present embodiment, a method of recording the power consumption tendencies of the whole town in the town adjustment information 150, and adjusting the power supply thresholds on the basis of the town adjustment information 150 has been described. In a modification, part of the town, such as several households may constitute a unit section, and the server 300 may analyze the power consumption tendencies of each unit section. When an increase in power consumption in a certain unit section is estimated, the server 300 may adjust the power supply threshold only for the homes 400 belonging to the unit section.

For example, assume that a town is divided into unit sections (districts) D1 to D5. Town adjustment information 150 is prepared for each of the unit sections D1 to D5. Upon receiving first battery information from a home 400, the tendency analyzing unit 314 recalculates an average power consumption of the whole unit section to which the home 400 belongs, and updates the town adjustment information 150. For example, when the power consumption of the unit section D1 in a preset period W is estimated to be high, the first determination unit 324 adjusts the power supply threshold for all the homes belonging to the unit section. Such a control method enables determination on whether or not to send an electricity delivery vehicle 200 by estimating power demand in a smaller unit than the whole town. For example, in some unit sections, power consumption may be high in a specific time slot on a specific day of the week because of a held event. Estimation of power demand in a smaller unit than a town facilitates more appropriate control of power supply thresholds.

In the present embodiment, calculation of an estimation of a future power consumption is based on an average value of power consumptions. For example, the tendency analyzing unit 314 collects the power consumptions (actual measured values) of a home 400 in a time slot of 12:00 to 13:00, and calculates an average of the collected power consumptions (actual measured values) as an estimated value of power consumption in this time slot. A median may be used instead of an average. In addition, the consumption estimating unit 316 may estimate a future power consumption by multivariate analysis in which a time slot, a day of the week, the number of people in a household, and the like are used as input parameters, or an estimation model such as a neural network.

The first determination unit 324 may perform home adjustment and town adjustment in parallel independently of each other. For example, a power supply threshold of the home 400 (H01) is set to T1. The first determination unit 324 changes the power supply threshold T1 of the home 400 (H01) to T2A on the basis of home adjustment. In addition, the first determination unit 324 changes the power supply threshold T1 of the home 400 (H01) to T2B on the basis of town adjustment. As a result, the home 400 (H01) has two power supply thresholds T2A and T2B. The first determination unit 324 may send an electricity delivery vehicle 200 to the home 400 (H01) when the remaining battery level of the home 400 (H01) has become lower than either one of the power supply thresholds T2A and T2B. Alternatively, the first determination unit 324 may send an electricity delivery vehicle 200 to the home 400 (H01) when the remaining battery level of the home 400 (H01) has become lower than both of the power supply thresholds T2A and T2B. Still alternatively, the first determination unit 324 may send an electricity delivery vehicle 200 to the home 400 (H01) when the remaining battery level of the home 400 (H01) has become lower than the average of the power supply thresholds T2A and T2B.

When a power consumption in a future time slot (preset period), which is an average based on past records, in a town (or a unit section) is high, the first determination unit 324 may increase the power supply threshold. According to such a control method, electricity delivery vehicles 200 can be proactively sent when power consumption is estimated to increase in the whole town. This facilitates prevention of power shortage at the homes 400.

Conversely, when a power consumption in a future time slot (preset period), which is an average based on past records, in a town (or a unit section) is high, the first determination unit 324 may decrease the power supply threshold. Alternatively, when an increase in power consumption is estimated and the number of S vehicles is a predetermined number or smaller, the first determination unit 324 may decrease the power supply threshold. According to such a control method, priority can be given to charging of the electricity delivery vehicles 200 in anticipation of a high power demand in the future.

A past value of a town power consumption in a certain time slot in a town (or a unit section) is represented by P1. In addition, a town power consumption in the same time slot is represented by P2. When P1 < P2, that is, in other words, when the latest town power consumption is higher as compared with the past power consumption tendencies, the first determination unit 324 may increase the power supply threshold for each home 400. For example, when a town power consumption P1 (average) of the past five weeks in a time slot of "12:00 to 13:00 on Friday" is 10[%] and a power consumption P2 (latest value) of the whole town in the most recent time slot of "12:00 to 13:00 on Friday" is 40[%], the first determination unit 324 increases the power supply threshold for each home 400. When the town power consumption is high as compared with the past power consumption tendencies, that is, in other words, when the power consumption is higher than estimated, prevention of power shortage at the homes 400 is facilitated by sending electricity delivery vehicles 200 earlier.

A past value of a town power consumption in a certain time slot in a town (or a unit section) is represented by P1. In addition, the latest town power consumption in the same time slot is represented by P2. When P1 > P2, that is, in other words, when the latest town power consumption is lower as compared with the past power consumption tendencies, the first determination unit 324 may decrease the power supply threshold for each home 400. Alternatively, when the power consumption is lower than that in the past and when the number of S vehicles is a predetermined number or smaller, the first determination unit 324 may decrease the power supply thresholds. According to such a control method, priority can rather be given to charging of the electricity delivery vehicles 200 to address the risk of power shortage in the future.

When the amount of power produced by the power station 102 is equal to or larger than a threshold or when the number of S vehicles is equal to or larger than a predetermined number, the first determination unit 324 may increase the power supply thresholds. When there is enough electricity, control may be performed to avoid surplus power by increasing the power supply thresholds and proactively sending electricity delivery vehicles 200. Conversely, when the amount of power produced by the power station 102 is lower than the threshold or when the number of S vehicles is smaller than the predetermined number, the server 300 may decrease the power supply thresholds.

In the description of the present embodiment, the power supply thresholds are adjusted by weather adjustment based on the probability of frozen precipitation. Weather adjustment is not limited to be based on the probability of frozen precipitation, and the server 300 may also adjust the power supply thresholds by weather adjustment based on the probability of rain and a forecast wind force.

When worse weather such as snow, rain, strong wind, or the like is anticipated, the first determination unit 324 may increase the power supply thresholds so as to proactively send electricity delivery vehicles 200 before the weather worsens. Conversely, when worse weather is anticipated, the first determination unit 324 may perform control to decrease the power supply thresholds so as to reduce the number of electricity delivery vehicles 200 to be sent for the anticipated bad weather.

When better weather such as fine weather is anticipated, the first determination unit 324 may increase the power supply thresholds. In this case, because the amount of power produced by photovoltaic power generation is estimated to increase, the dispatch determination unit 312 may proactively send electricity delivery vehicles 200. Conversely, when better weather is anticipated, the power supply thresholds may be decreased. In this case, because the amount of produced power is estimated to increase, as many electricity delivery vehicles 200 as possible may be kept on standby to charge many electricity delivery vehicles 200.

In the description of the present embodiment, the balance between dispatch and standby of electricity delivery vehicles 200 is controlled by increasing and decreasing the power supply thresholds. In a modification, instead of adjustment of the power supply thresholds, dispatch of electricity delivery vehicles 200 may be performed or stopped when a predetermined condition is met. For example, when a future power consumption at a home 400 is estimated to be equal to or higher than a predetermined threshold, the dispatch determination unit 312 may send electricity delivery vehicles 200 regardless of the remaining battery levels of the homes 400. Alternatively, when snow is anticipated, electricity delivery vehicles 200 may be sent regardless of the remaining battery levels of the homes 400. In a case of bad weather such as snow, the dispatch determination unit 312 may stop dispatch of the electricity delivery vehicles 200.

When the first determination unit 324 has increased the power supply thresholds, more homes 400 are likely to be determined as R homes. In other words, as the power supply thresholds are larger, power supply by the electricity delivery vehicles 200 is more proactively performed. The first determination unit 324 may adjust the moving thresholds instead of the power supply thresholds. When the moving thresholds are decreased, more electricity delivery vehicles 200 are likely to be determined as S vehicles. Thus, as the moving thresholds are decreased, power supply by the electricity delivery vehicles 200 is more proactively performed. The first determination unit 324 may adjust one or both of the power supply thresholds and the moving thresholds to adjust the frequency of starting the electricity delivery vehicles 200.

When an electricity delivery vehicle 200 has been lost, has broken down, or cannot reach a home 400 by a scheduled time, the transmitting unit 216 of the electricity delivery vehicle 200 may transmit an alarm signal. The receiving unit 310 of the server 300 in receipt of the alarm signal may send another electricity delivery vehicle 200 instead toward the home 400 (R home). In addition, upon occurrence of such trouble, an anomaly notifying unit (not illustrated) of the electricity delivery vehicle 200 may turn on a lamp mounted thereon. A person near the electricity delivery vehicle 200 may notify the operator of the server 300 of the presence of the electricity delivery vehicle 200 in trouble. Creating situations in which residents help electricity delivery vehicles 200 may be effective in facilitating coexistence of residents and electricity delivery vehicles 200.

The homes 400 may receive power supply from fuel cells. In this case, the server 300 may cause autonomous vehicles to carry methanol.

Carbon dioxide emissions per unit power generation amount of respective types of power supply lines 108 may be set as "carbon metrics". A higher electricity rate (fee) may be set for a power station with a higher carbon metrics. For example, assume that the carbon metrics of the power station 102A, the power station 102B, and the power station 102C are 2:5:10. When the power generation ratio of the power station 102A, the power station 102B, and the power station 102C in a certain time slot T is 5:3:2, the carbon metrics in the time slot T is 4.5 (=2×0.5+5×0.3+10×0.2). The electricity rate in the time slot T is set to a price proportional to the carbon metrics 4.5. As a result, homes 400 that have received power supply from electricity delivery vehicles 200 pay the electricity rate proportional to the carbon metrics 4.5 when the electrical energy supplied from the electricity delivery vehicles 200 is charged in the time slot T.

Such a control method enables reduction in the electricity rate in time slots in which power generation using natural energy is active. This can encourage consumers to change their behaviors to change the usage of electricity depending on the natural environment (power generation environment). This can lead to establishment of lifestyles adapted to the nature.

In addition, the electricity rates for homes 400 near the power station 102 are lower because the moving distances of the electricity delivery vehicles 200 are shorter. There is therefore an advantage in living near power stations 102, which is effective in facilitating disperse arrangement of power stations 102 in a town. Furthermore, there may be a possibility of increasing the values of real estate of lands near power stations 102.

In the description of the present embodiment, the server 300 is assumed to be a computer installed in a stationary manner and configured to transmit commands to a plurality of electricity delivery vehicles 200. In a modification, one of the electricity delivery vehicles 200 may have the functions of the server 300. Hereinafter, such an electricity delivery vehicle 200 will be referred to as an "L vehicle (leader vehicle)". The L vehicle includes a built-in secondary battery 208 (mobile battery) and has the functions of the communication unit 202, the data processing unit 204, the drive mechanism 206, the camera 210, the data storage unit 212, the charge and discharge connection port 214, and the like in a manner similar to the electricity delivery vehicle 200 illustrated in FIG. 3. The L vehicle also has the functions as the server 300 illustrated in FIG. 5 including the communication unit 302, the data processing unit 304, and the data storage unit 306.

The L vehicle as the server 300 collects the first battery information from the homes 400. In addition, the L vehicle collects the second battery information from the other electricity delivery vehicles 200. When the remaining battery level of a home 400 has become lower than the power supply threshold, the L vehicle selects an electricity delivery vehicle 200 (S vehicle) to be sent to the home 400. In this case, the L vehicle itself is also included in the candidates for the electricity delivery vehicle 200 to be sent. When an electricity delivery vehicle 200 other than the L vehicle is selected, the L vehicle transmits a start instruction to the selected electricity delivery vehicle 200. When the L vehicle itself is selected, the L vehicle starts toward the home 400. The L vehicle is always capable of receiving the first battery information and the second battery information through radio communication in any state regardless of whether the L vehicle is moving, charging or the like. When a new R home is detected during charging at a home 400, for example, the L vehicle may select an S vehicle and instruct the selected S vehicle to start moving through radio communication.

## Claims

1. A mobile charging system comprising:
a home to which power is to be supplied from a first secondary battery;
a mobile object including a second secondary battery and being autonomously movable; and
a server connected with the home and the mobile object via a communication network, wherein
the home includes:
a battery managing unit to measure a battery charge level of the first secondary battery; and
a communication unit to transmit battery information including the battery charge level to the server,
the server includes:
a receiving unit to receive the battery information from the home; and
a transmitting unit to transmit a start instruction to the mobile object in a standby state when the battery charge level in the battery information is lower than a first threshold, and
the mobile object includes:
a drive mechanism to move the mobile object;
a receiving unit to receive the start instruction;
a movement control unit to set the home as a goal point and instruct the drive mechanism to move upon receiving the start instruction, and
a battery managing unit to supply power to the first secondary battery from the second secondary battery when the mobile object has reached the home.

2. The mobile charging system according to claim 1, wherein
the battery managing unit of the mobile object further measures a battery charge level of the second secondary battery, and determines whether or not the battery charge level of the second secondary battery has become lower than a second threshold during power supply to the first secondary battery, and
the movement control unit of the mobile object sets a return position to return to and instructs the drive mechanism to move to the return position when the battery charge level has become lower than the second threshold.

3. The mobile charging system according to claim 2, wherein
the drive mechanism of the mobile object is driven by the second secondary battery as a power source, and
the battery managing unit of the mobile object changes the second threshold depending on the distance from the home to the return position.

4. The mobile charging system according to claim 1, wherein the server further includes:
a tendency analyzing unit to record individual consumption information indicating a power consumption tendency of the home on the basis of the battery information, and
a dispatch determining unit to change the first threshold in accordance with the individual consumption information.

5. The mobile charging system according to claim 4, wherein
the receiving unit of the server receives the battery information from each of a plurality of homes,
the tendency analyzing unit of the server further records general consumption information indicating a power consumption tendency of all the homes, and
the dispatch determining unit of the server changes the first threshold in accordance with the general consumption information.

6. The mobile charging system according to claim 5, wherein the server further includes:
a consumption estimating unit to estimate a power consumption of all the homes in a first future period in accordance with the general consumption information, and
when an estimated value of the power consumption in the first period is equal to or higher than a third period, the dispatch determining unit of the server increases the first threshold in a second period before the first period.

7. The mobile charging system according to claim 1, wherein the server further includes:
a weather acquiring unit to acquire weather information; and
a dispatch determining unit to refer to the weather information, and when forecast weather in a third period meets a predetermined weather condition, change the first threshold in a fourth period before the third period.

8. The mobile charging system according to claim 1, wherein
the server includes a second secondary battery and is configured to be movable, and includes:
a dispatch determining unit to select any of the server and the mobile object as an object to be dispatched when the battery charge level in the battery information is lower than the first threshold;
a drive mechanism to move the server;
a movement control unit to set the home as a goal point and instruct the drive mechanism to move when the server is selected as the object to be dispatched; and
a battery managing unit to supply power to the first secondary battery from the second secondary battery when the server has reached the home.

9. A mobile object comprising:
a second secondary battery;
a drive mechanism to move the mobile object by the second secondary battery as a power source;
a receiving unit to receive a start instruction specifying a home from a server;
a path calculating unit to refer to map information and calculate a path from a current position to the home upon receiving the start instruction;
a movement control unit to control the drive mechanism in accordance with the calculated path; and
a battery managing unit to supply power to a first secondary battery installed at the home from the second secondary battery upon reaching the home, wherein
the movement control unit controls the drive mechanism to return to a predetermined return position from the home after power supply to the first secondary battery.

10. A server connected, via a communication network, with a home to which power is to be supplied from a first secondary battery and a mobile object including a built-in second secondary battery and being autonomously movable, the server comprising:
a receiving unit to receive battery information including a battery charge level of the first secondary battery from the home; and
a transmitting unit to transmit a start instruction specifying the home as a goal point to the mobile object in a standby state when the battery charge level indicated in the battery information is lower than a first threshold.

11. A mobile charging system comprising:
a plurality of homes to each of which power is supplied from a first secondary battery;
a plurality of mobile objects each including a second secondary battery and each being autonomously movable; and
a server connected with the homes and the mobile objects via a communication network, wherein
the homes each include:
a battery managing unit to measure a battery charge level of the first secondary battery; and
a communication unit to transmit first battery information including the battery charge level together with a home ID to the server,
the server includes:
a first receiving unit to receive the first battery information from each of the homes;
a second receiving unit to receive second battery information including a battery charge level of a second secondary battery from each of the mobile objects;
a first determining unit to determine whether or not one or more homes with a battery charge level indicated in the first battery information being lower than a first threshold are present;
a second determining unit to determine whether or not one or more mobile objects with a battery charge level indicated in the second battery information being equal to or higher than a fourth threshold are present; and
a transmitting unit to transmit a start instruction when a home with the battery charge level in the first secondary battery being lower than the first threshold is present, the start instruction specifying the home, the transmitting unit transmitting the start instruction to any one of mobile objects in a standby state and with the battery charge level of the second secondary battery being equal to or higher than the fourth threshold,
the mobile objects each include:
a drive mechanism to move the mobile object;
a receiving unit to receive the start instruction;
a path calculating unit to refer to map information and calculate a path from a current position to the home specified by the start instruction upon receiving the start instruction;
a movement control unit to control the drive mechanism in accordance with the calculated path; and
a battery managing unit to supply power to the first secondary battery installed at the specified home from the first secondary battery of the mobile object upon reaching the specified home, and
the movement control unit of each of the mobile objects controls the drive mechanism to return from the home to a predetermined original position after power supply to the first secondary battery.

12. The mobile charging system according to claim 11, wherein the server is included in one of the mobile objects.
